(19) Europäisches Patentamt
European Patent Office
Office européen des brevets

(11) Publication number: **0 189 474 B1**

(12) **EUROPEAN PATENT SPECIFICATION published in accordance with Art. 158(3) EPC**

(45) Date of publication of patent specification: **24.04.91**

(51) Int. Cl.5: **C08G 59/02**, C09D 163/00

(21) Application number: **85904109.7**

(22) Date of filing: **14.08.85**

(86) International application number: **PCT/EP85/00416**

(87) International publication number: **WO 86/01216 (27.02.86 86/05)**

# (54) A PROCESS FOR THE PREPARATION OF EPOXY RESINS OF CONTROLLED CONVERTION.

(30) Priority: **16.08.84 GB 8420816**

(43) Date of publication of application: **06.08.86 Bulletin 86/32**

(45) Publication of the grant of the patent: **24.04.91 Bulletin 91/17**

(84) Designated Contracting States: **AT BE CH DE FR GB IT LI NL SE**

(56) References cited:
EP-A-01 154 32
WO-A-82/04257
WO-A-84/00171
WO-A-40/0171
WO-A-82/01877
WO-A-83/04414
WO-A-86/00627
US-A- 4 438 254

(73) Proprietor: **THE DOW CHEMICAL COMPANY**
**2030 Dow Center Abbott Road P.O. Box 1967**
**Midland Michigan 48640-1967(US)**

(72) Inventor: **KOENIG, Raymond, Alphonse**
**2, rue de Howald**
**F-67550 Vendenheim(FR)**
Inventor: **ELLIOT, Brian, William**
**5 Garden Terrace East Park Drive**
**Edinburgh EH4 6JR(GB)**

(74) Representative: **Raynor, John et al**
**W.H. Beck, Greener & Co 7 Stone Buildings**
**Lincoln's Inn**
**London WC2A 3SZ(GB)**

EP 0 189 474 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to epoxy resins; to a process for preparing said resins and to compositions containing these resins.

Due to their physical and chemical properties such as resistance to chemical attack, good adhesion to various substrates, solvent resistance and hardness, epoxy resins are useful in a wide variety of commercial applications including the coating of various substrates such as metal, wood and plastic, and the preparation of structural and electrical laminates. In many applications such as the coating of the interior of containers ("cans"), the epoxy resin is applied from an organic liquid solution or aqueous dispersions.

Epoxy resins of differing molecular weight (so-called "advanced epoxy resins") can be prepared by the reaction of a polyepoxide such as the diglycidyl ether of bisphenol A with a polyhydric phenol such as bisphenol A.

The molecular weight of the epoxy resin generally affects the softening point, melt viscosity and solution viscosity of the epoxy resin as well as the physical and chemical properties of the cured product prepared therefrom. It is often desirable to prepare as high a molecular weight epoxy resin as practical to provide a product of sufficient toughness. High molecular weight resins are generally prepared by a two-step process wherein a lower molecular weight epoxy resin is prepared initially by reacting a polyhydric phenol with epichlorohydrin and alkali metal hydroxide in the presence of a catalyst. Thereafter, the initial polyepoxide reaction product is advanced by its reaction with additional amounts of polyhydric phenol to form the higher molecular weight material. In conventional techniques for preparing the epoxy resins, the reaction of the polyepoxide and polyhydric phenol is typically carried to complete conversion such that the final, advanced epoxy resin contains relatively low amounts of residual phenolic hydroxyl groups. For example, epoxy resins having an EEW (epoxy equivalent weight) between 500 and 700 prepared from bisphenol A and the diglycidyl ether of bisphenol A typically contain less than 800 parts per million of phenolic hydroxyl groups which represents more than 98 percent conversion of the phenolic hydroxyl groups employed in preparing the epoxy resin. A higher molecular weight epoxy resin having an EEW from greater than 2000 to 4000 typically contains less than 2500 ppm of phenolic OH groups which represents more than 95 percent conversion of the phenolic hydroxyl groups. Any residual hydroxyl groups in the advanced resin have been stated to cause viscosity instability of the resulting resin mixture, particularly at elevated temperatures. As a means for controlling the stability of the resin due to the unreacted phenolic hydroxyl groups, U.S. Patent No. 3,842,037 suggests adding a strong, inorganic acid when at least 85, more preferably at 95, percent of the phenolic hydroxyl groups employed in the advancement reaction have been reacted.

Alternatively, in another method for preparing a high molecular weight epoxy resin, U.S. Patent No. 3,352,825 teaches condensing a dihydric phenol with an excess of epichlorohydrin in the presence of a catalyst such as an alkali metal or ammonium salt of an inorganic monobasic acid to form an intermediate having a free hydroxyl content in the range of from 0.2 to 0.95 phenolic hydroxyl group per mole of said dihydric phenol. Subsequently, the excess epichlorohydrin is removed and the intermediate condensate subsequently dehydrogenated, using caustic alkali and simultaneously the free phenolic hydroxyl groups are reacted with the epoxy groups formed in situ.

Unfortunately, increasing the molecular weight of an epoxy resin also generally increases the melt and solution viscosities of the resin. Such increase in melt and solution viscosities renders the application of the epoxy resin more difficult.

One method by which the melt and solution viscosities of an epoxy resin can be reduced for a given EEW is by regulating the chain growth using a monofunctional reactant such as a monofunctional phenolic or epoxy compound as a capping agent. Unfortunately, the use of these capping agents results in a formation of an epoxy resin having reduced epoxy functionality and a lower softening point at a given EEW. The reduction in epoxy functionality markedly reduced the physical properties such as toughness of the cured resin product prepared therefrom.

In view of the aforementioned characteristics of the epoxy resins known in the prior art, it would be highly desirable to provide an epoxy resin having a lower melt and/or solution viscosity without a coincident and significant decrease in the softening point of the resin or in the physical properties of the resulting products prepared from the resin.

The present invention provides a process for preparing an epoxy resin by reacting a polyepoxide with a polyol which contains phenolic or glycolic OH groups, in the presence of a catalyst for the reaction of an epoxy group with a hydroxyl group characterised by terminating the reaction by the addition of a material which effectively inhibits further reaction of the epoxy and hydroxy groups at a point when the reaction product contains at least 0.25 weight percent of each of the epoxy groups and the terminal hydroxyl groups,

said weight percent being based on the total weight of the epoxy resin reaction product, provided that the ratio of epoxy groups to hydroxyl groups in the starting materials is less than 2:1.

US 4438254 relates to a method of preventing catalyst deactivation in the preparation of certain epoxy resins, and mentions the fact that the progress of the advancement reaction can be monitored by removing samples and analysing them by conventional techniques. There is no suggestion in this reference however that an advancement reaction might be stopped substantially prior to completion and indeed the reference is concerned with preventing catalyst deactivation, so as to drive the reaction as far to completion as possible.

WO-A-86/00627(PCT/US85/01344), which forms part of the start of the art only by virtue of article 54(3) EPC, and not by virtue of article 54(2), is concerned primarily with the advancement of epoxy resins under certain specific reaction regime.

Certain of the examples in the said reference in particular, Examples 48 and 50, do however disclose a particular set of reaction conditions in which a stabiliser is added to an epoxy resin/polyol mixture after only a limited amount of reaction has taken place. These examples however either also contain sulfanilamide as a curing agent, and/or have a ratio of epoxy groups to hydroxyl groups in the starting material of more than 2:1.

The epoxy resins preferred in accordance with the present invention, which are hereinafter referred to as Controlled Conversion Resins (CCR resins), offer a significant number of advantages over conventional epoxy resins which are fully converted and contain essentially no terminal hydroxyl groups. For example, the melt and solution viscosity of the CCR resins are reduced when compared to conventional epoxy resins having the same EEW. Moreover, the epoxy resins of the present invention are capable of being cured to chemically resistant products having physical properties which are essentially equivalent to conventional resins.

Due to the fact that CCR resins contain both epoxy and terminal hydroxyl groups, the CCR resins can constitute a convenient homogeneous, one-component system which need not require an additional hardener. For example, solid CCR resins can be formulated into a powder coating by the addition of an accelerator only. In general, these powder coating formulations exhibit increased stability against sintering as compared to a conventional epoxy resin formulation due to their higher softening point at a given melt viscosity.

Due to the lower solution viscosity of the CCR resins, the resins are capable of being formulated in an organic liquid at a higher solids level than conventional epoxy resins having the same EEW to prepare solutions having equivalent viscosities. Such high solid epoxy resin formulations can be conveniently applied to a substrate to form a coating of equivalent flexibility and chemical resistance as a coating prepared from a conventional epoxy resin applied from a solution of lower solids content.

The polyol component employed in preparing the CCR resin in accordance with the invention is a polyhydric alcohol containing an average of more than one hydroxyl group, preferably 1.8 or more hydroxyl groups, reactive with the epoxy groups of the polyepoxide, selected from polyhydric phenols and saturated aliphatic polyols having primary OH-groups, which can be substituted with one or more non-interfering substituents such as halogen atoms or either radicals. Polyhydric phenols are preferred. The polyhydric phenols are represented by the following structural formula:

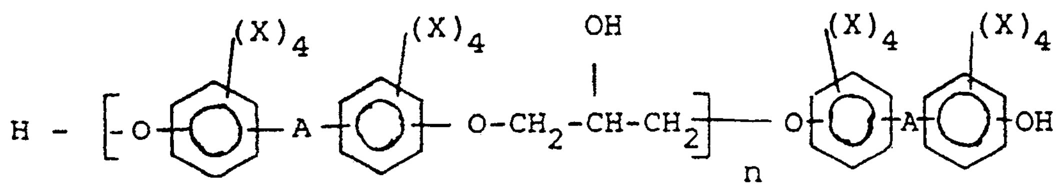

(I)

wherein each A is independently -O-; -S-, -S-S-, -CO-, - S(O)-, $-S(O)_2-$, a divalent hydrocarbon radical containing from 1 to 8 carbon atoms or an oxygen, sulfur, or nitrogen containing hydrocarbon radical or a covalent bond; each X is independently hydrogen, halogen or an alkyl group containing from 1 to 4 carbon atoms and n has an average value of 0 to 5, preferably from 0 to 2; and the novolac resins (phenol-aldehyde) condensates of the formula:

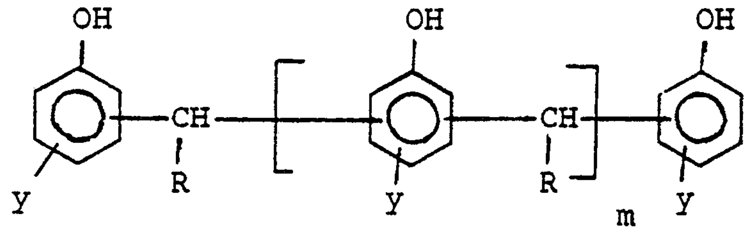

(II)

wherein each R is individually hydrogen or an alkyl radical having from 1 to 4 carbon atoms, each Y is independently hydrogen, chlorine, bromine or a lower alkyl group and m has an average value from 0 to 10. Mixtures of one or more polyhydric phenols are also suitably employed herein.

Preferably, the polyhydric phenol is a polyhydric phenolic compound of the general structural formula (I) wherein A is a divalent hydrocarbon radical having from 1 to 8 carbon atoms, each X is hydrogen, and n has an average value of from 0 to 0.5, more preferably 0. Most preferred of the polyhydric phenols is 2,2-bis(-4-hydroxy phenyl) propane, commonly referred to as bisphenol A (BPA).

The polyepoxide component useful in preparing the epoxy resin of the present invention is a compound having two or more epoxide groups. The polyepoxides can be saturated or unsaturated aliphatic, cycloaliphatic, aromatic or heterocyclic compounds and can be substituted with one or more non-interfering substituents such as halogen atoms or ether radicals which are not reactive with the epoxy or hydroxyl groups at the conditions at which the CCR resins are prepared. The polyepoxide component which is reacted with the polyol to form the CCR resin can be monomeric or polymeric.

Illustrative examples of epoxy resins useful herein are described in The Handbook of Epoxy Resins by H. Lee and K. Neville, published in 1967 by McGraw-Hill, New York, in appendix 4-1, ppgs. 4-35 through 4-56.

Polyepoxides of particular interest in the practice of this embodiment include the polyglycidyl ethers of bisphenol compounds represented by the general structural formula:

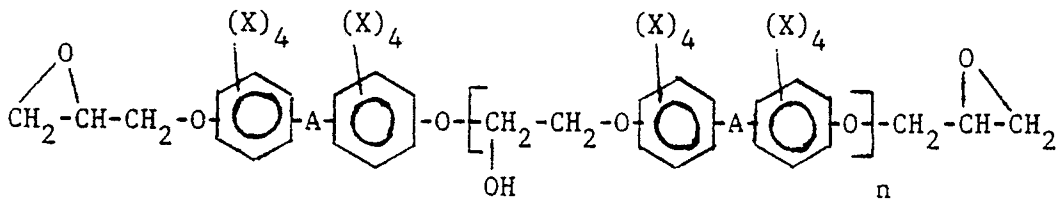

(III)

wherein each A and X are as described above in the description of formula (I) and n has an average value of 0 to 4, preferably 0 to 2, most preferably from 0 to 0.5; the polyglycidyl ethers of a novolac resin, i.e., phenol aldehyde condates of the formula:

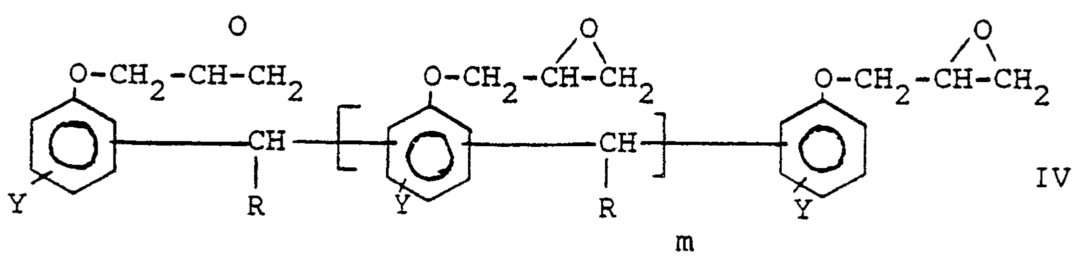

IV

wherein R, Y and m are described as above with reference to formula (II); polyglycidyl ethers of polyglycols such as the diglycidyl ether of polypropylene glycol; and the polyglycidyl ethers of tris(phenol)methane. Mixtures of one or more polyepoxides are also suitably employed herein. Preferred polyepoxides are the liquid polyglycidyl polyethers of a bisphenol, particularly the diglycidylether of bisphenol A; the polyglycidyl polyethers of a tetrabromobisphenol, particularly the diglycidylether of tetrabromobisphenol A and mixtures thereof.

The polyepoxide and polyol are advantageously employed in an amount such that the number of epoxy equivalents in the polyepoxide to the number of hydroxyl equivalents of the polyol is from 0.1:1 to 10:1. Preferably, the polyepoxide and polyol components are employed in a ratio from 0.3:1 to 5:1, more

preferably from 0.3:1 to 2:1, epoxy equivalents to hydroxyl equivalents. The relative proportions of the polyepoxide and polyol components most advantageously employed will be dependent on a variety of factors including the specific polyepoxide and polyol employed and the desired properties of the epoxy resin prepared therefrom. In a preferred CCR resin, the polyepoxide component is employed in less than a stoichiometric amount. In a most preferred embodiment, from 0.6:1 to 1.6:1 hydroxyl equivalents are employed for each epoxy equivalent of the polyepoxide.

In preparing the CCR resins, the polyol and the polyepoxide components are contacted in the presence of a catalyst for the reaction between the hydroxyl groups of the polyol and the epoxy groups of the polyepoxide and at conditions sufficient to form the desired CCR resin. Preferably, this reaction is conducted neat, i.e., in the absence of any reaction diluent.

Materials capable of catalyzing the stated reaction are well-known in the art and reference is made thereto for the purposes of this invention. Illustrative catalysts are set forth in U.S. Patent Nos. 2,216,099; 2,633,458; 2,658,855; 3,377,406; 3,694,407; 3,948,855; 4,389,520; 4,354,015; and 3,477,990 and The Handbook of Epoxy Resins by H. Lee and K. Neville, published in 1967 by McGraw-Hill, New York. Representative of the described catalysts are secondary and tertiary amines, preferably tertiary amines such as benzyl dimethyl amine, triethyl amine and benzyl diethyl amine; the alkali metal hydroxides e.g., potassium hydroxide; quaternary ammonium compounds such as tetralkylammonium halides, e.g., tetramethyl ammonium chloride and phosphines and quaternary phosphonium salts such as triphenyl phosphine and ethyltriphenyl phosphonium acetate-acetic acid complex.

The catalyst is typically employed in conventional amounts. These amounts will vary depending on the specific catalyst, polyepoxide and polyol employed but will preferably vary from 0.005 to 1 weight percent based on the total weight of the polyol and polyglycidyl ether components. More preferably, from 0.01 to 0.5 weight percent of the catalyst is employed, said weight percent being based on the total weight of the polyol and polyepoxide components.

Although not preferred, the reaction of the polyol and polyepoxide components can be conducted in the presence of a reaction diluent. If employed, the reaction diluent is preferably a solvent for or miscible with both the polyol and polyepoxide component. Representative solvents which can be employed include various glycol ethers such as ethylene or propylene glycol monomethylether and esters thereof such as ethylene glycol monoethylether acetate; ketones such as methylisobutylketone, methylethylketone and acetone; and aromatic hydrocarbons such as toluene, xylene or mixtures thereof. If employed, the organic liquid reaction diluent is generally employed in an amount from 5 to 300 percent based on the total weight of the polyol and polyepoxide components.

The reaction of the polyol and polyepoxide is advantageously carried out at an elevated temperature, preferably from 60° C to 200° C, more preferably from 100° C to 180° C. The reaction is continued until the desired conversion, as determined by measuring the residual epoxy and terminal hydroxyl content in the resin, at which point, the reaction is effectively terminated.

A convenient method for cooling the reaction mixture comprises the addition of a solvent to the mixture, thereby diluting the mixture and reducing its temperature. The amount of organic solvent to be added is dependent on the reaction temperature and the temperature at which reaction is effectively terminated. The addition of organic solvent to the reaction mixture is particularly preferred when the CCR resin is subsequently to be applied from solution.

The reaction is inhibited by adding a material to the reaction mixture which effectively inhibits further reaction such as by deactivating the catalyst, or by interrupting the reaction mechanism, thereby inhibiting further reactions between the polyol and the polyepoxide.

Strong inorganic and organic acids and the anhydrides and esters of said acids (including half esters and part esters) have been found to be particularly effective as reaction inhibitors. By the term "strong acid" it is meant an organic acid having a $pK_a$ value below 4, preferably below 2.5. Representative reaction inhibitors include inorganic acids such as hydrochloric acid, sulfuric acid and phosphoric acid; inorganic acid anhydrides such as phosphoric acid anhydride ($P_2O_5$); esters of inorganic acids such as dimethyl sulfate; the organic acids such as alkyl, aryl and aralkyl and substituted alkyl, aryl and aralkyl sulfonic aicds such as p-toluene sulfonic acid and phenyl sulfonic acid and stronger organic carboxylic acids such as trichloroacetic acid and alkyl esters of said acids, such as the alkyl esters of p-toluene sulfonic acid, e.g., methyl-p-toluene sulfonate, and ethyl-p-toluenesulfonate and methanesulfonic acid methylester. An example of an acid anhydride of a strong organic acid that can be employed herein is p-toluene sulfonic acid anhydride. Of the reaction inhibitors, the alkyl esters of sulfuric acid; the aryl or aralkyl sulfonic acids and the alkyl esters of said acids are preferably employed herein. Most preferably, an alkyl ester. of para-toluene sulfonic acid, particularly methyl or ethyl-p-toluene sulfonic acid is employed as the reaction inhibitor herein.

The amounts of reaction inhibitor added to the reaction mixture are dependent on the specific inhibitor employed and the catalyst employed in preparing the CCR resin. In general, the inhibitor is added in an amount sufficient to overcome the catalytic activity of the catalyst. Preferably, at least 1.0, more preferably at least 2, equivalents of the inhibitor are added for each equivalent of the catalyst employed. Although the maximum amount of inhibitor added to the reaction mixture is dependent on the desired properties of the resin and the expense of adding excess inhibitor, the inhibitor is preferably added in an amount not exceeding 5 equivalents for each equivalent of catalyst in the reaction mixture.

The reaction is terminated at a point such that the resulting CCR resin contains the desired amounts of epoxy groups and terminal hydroxyl groups. In this invention, the CCR resin will contain at least 0.25 percent, by weight, of each of the epoxy and terminal hydroxyl groups. By the term "epoxy group" it is meant a radical of the following structural formula:

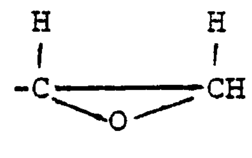

having an equivalent weight of 43 and by the term "terminal hydroxyl group" it is meant a terminal hydroxyl group having an equivalent weight of 17. For the purposes of this invention, the percent epoxy groups in the CCR resin reaction product is determined by the method described in Footnote (1) of Table I. The percent terminal phenolic hydroxyl groups is determined by the method described in Footnote 2 of Table I.

The hydrolyzable chloride content of the CCR resin is generally less than 1 and often less than 0.5 percent based on the total weight of the epoxy resin reaction product. However, a hydrolyzable chloride content of up to 5, preferably up to 2, weight percent based on the total weight of the epoxy resin reaction product can be tolerated. The amounts of hydrolyzable chloride are determined for the purpose of this invention by the method described in The Handbook of Epoxy Resins by H. Lee and K. Neville (supra) pages 4-29 and 4-30 (Table 4-23).

Although the amount of epoxy groups and terminal hydroxyl groups most advantageously contained by the CCR resin is dependent on the desired properties of the CCR resin, e.g., its solution viscosity, the CCR resin preferably contains at least 0.5, more preferably at least 1, percent of epoxy groups and at least 0.25, more preferably at least 0.5, percent of terminal hydroxyl groups, said weight percents being based on the total weight of the CCR resin. In general, the CCR resin preferably comprises less than 20, more preferably less than 12, weight percent of epoxy groups and less than 10, more preferably less than 5 weight percent of the terminal hydroxyl groups.

Conversion of the polyol and polyepoxide components is controlled such that the CCR resin contains the desired amounts of epoxy and hydroxyl groups. This conversion is dependent on the amount of polyol and epoxide employed. Advantageously, at least 10 percent and up to 95 percent of the deficient component or, if the components are employed in equivalent amounts, of both components are reacted. Preferably, at least 35, more preferably at least 45, most preferably at least 55, and up to 95, more preferably up to 90, most preferably up to 85, percent of the deficient component are reacted.

The molecular weight (number average) of the CCR resin is dependent on the desired end-use application of the CCR resin and the physical and chemical properties required for said end use. Preferably, the CCR resins have a molecular weight of less than 10,000. More preferably, the CCR resins will possess molecular weights of less than 4000, most preferably less than 2000, and more preferably more than 300, most preferably more than 500.

In the practice of the present invention, the polyepoxide can be advanced with a polyol and, optionally, a polyacid to completion (thereby forming a resin having either only epoxy groups or terminal hydroxyl groups depending on which reactant is employed in excess) in one reaction step and thereafter reacted with a polyol or a polyepoxide component to form the CCR resin. However, more preferably, the polyepoxide such as the diglycidyl ether of bisphenol A is reacted, in a one-step reaction, with the polyol to form the desired CCR resin.

Upon termination of the reaction, the CCR resin can be formulated into a number of different compositions for use in a variety of end-use applications. For example, the CCR resin can be admixed with an accelerator and, optionally, other adjuncts such as flow control agent to form a powder coating composition. Although no additional hardener is required since the CCR resin contains both unreacted epoxy and unreacted terminal hydroxyl groups, a hardener is often advantageously added to the powder coating.

Hardeners and accelerators conventionally employed in powder coating compositions can be employed in a powder coating composition of the CCR resin. Such hardeners and accelerators are well-known in the art and reference is made thereto for the purposes of this invention. Representative accelerators include stannous salts of monocarboxylic acids, such as stannous octoate and stannous laurate, various alkali metal salts such as lithium benzoate, certain heterocyclic compounds such as imidazole and benzimidazole compounds and salts thereof, onium compounds such as quaternary ammonium and phosphonium compounds and tertiary amines and phosphines.

Preferred accelerators for use in preparing the powder coating formulations are those which are solid at room termperature and include the imidazoles, particularly the alkyl substituted imidazoles such as 2-methyl imidazole, solid phosphines or amines such as triphenyl phosphine and phosphonium and quaternary ammonium compounds. Most preferred are the imidazoles.

In preparing the powder coating composition, the amount of accelerator most advantageously employed will vary depending on the particular accelerator and the CCR employed. Preferably, the accelerator will be employed in an amount from 0.01 to 5 weight percent based on the weight of the CCR resin. More preferably, the accelerator is employed in an amount from 0.02 to 3 weight percent based on the weight of the CCR resin.

Representative of the optionally employed hardeners are phenolic hardeners such as phenolic or cresol novolacs and the phenolic hardeners as described in British Patent Specification No. 1,429,076, dicyandiamide, acid anhydrides such as trimelletic anhydride and the acid functional polyesters. If employed, the hardeners are generally employed in an amount from 1 to 50 weight percent based on a total weight of the CCR resin.

Alternatively, following preparation of the CCR resin, it can be dissolved in an organic liquid for subsequent application. Suitable organic liquids for preparing the organic liquid solution of the CCR resin are dependent on the particular CCR resin and the amounts of terminal hydroxyl and epoxy groups in the resin. In general, alcohols such as n-butanol, glycol ethers such as propylene glycol monomethyl ether and esters thereof, ketones, aliphatic or aromatic hydrocarbons such as xylene and chlorinated aliphatic and aromatic hydrocarbons are preferred.

In preparing an organic liquid solution of the CCR resin, it is generally desirable to employ a hardener which is also soluble in the organic liquid. Such hardeners are well-known in the art and reference is made thereto for the purposes of this invention. Representative hardeners include phenolic resole resins such as the reaction product of phenol with an excess of formaldehyde and other hydroxymethyl-containing benzene derivatives and alkylated derivatives thereof and amine-aldehyde condensates, commonly referred to as "aminoplast" or "aminoplastics" which are the condensation products of an aldehyde with an amine such as melamine, urea and benzoquanamine and the alkylated derivatives thereof.

The amount of the hardener most advantageously employed is dependent on a variety of factors including the end-use application for the organic liquid solution and the desired physical and chemical properties of said end-use application. Preferably, from 1 to 50 weight percent of the hardener are employed based on the total weight of the CCR resin and hardener.

In addition, it is often desirable to add a small amount of an inorganic acid to the organic liquid solution as a catalyst for the reaction of the CCR resin with the hardener. In general, the inorganic acid is preferably phosphoric acid and is used in an amount from about 0.1 to 5 weight percent based on the total weight of the organic liquid solution.

The solids concentration at which the organic liquid solution is prepared is dependent on various factors including the desired viscosity of the resulting solution. In general, the organic liquid solution is formulated such that the solids content is as high as possible while maintaining a sufficiently low viscosity for effective application. Since the CCR resins exhibit a lower solution viscosity than conventional resins which would posess equivalent cured properties, the organic liquid solution of a CCR resin can generally be prepared at higher solids concentrations than an organic liquid solution of a conventional resin. For example, a CCR resin useful in coating applications is advantageously formulated as an organic liquid solution which comprises at least 40 percent of the CCR resin and any hardener employed based on the total weight of the organic liquid solution. More preferably, the liquid solution contains at least 50 percent, most preferably from 50 to 70 weight percent of the CCR resin and hardener.

The following examples are set forth to illustrate the invention and should not be construed to limit its scope. In the examples, all parts and percentages are by weight unless otherwise specified. In the examples, the polyglycidyl ethers, polyols, catalysts and reaction inhibitors are designated as follows:

| Component | Designation | Descriptions |
|---|---|---|
| Polyepoxide | A | Diglycidyl ether of bisphenol A having an EEW of 180 |
| | B | Epoxy novolac resin having a functionality of 3.6 and an EEW of 179.4 |
| | C | An aliphatic diglycidyl ether of polyglycol having an EEW of 324.2 |
| Polyol | D | Bisphenol A |
| | E | Hydroquinone |
| | F | Ethylene glycol |
| Catalyst | G | Ethyltriphenyl phosphonium acetate monoacetic acid complex (70 weight percent solution in methanol) |
| | H | N-Ethyl morpholine |
| | I | N-Methyl morpholine |
| | J | Potassium hydroxide |
| | K | Dimethylethanolamine |
| Reaction Inhibitor | L | Methyl ester of para-toluene sulfonic acid |
| | M | Para-toluene sulfonic acid |
| | N | Dimethyl sulfate |

Footnotes to following Tables

(1) The weight percent epoxide groups in the CCR resin. This percentage was determined by preparing:
(a) a perchloric acid solution by (1) placing 250 ml of glacial acetic acid into a one liter flask, (2) adding and mixing 13 ml of a 60 percent aqueous solution of perchloric acid into the flask, (3) adding 50 ml of acetic anhydride to the flask, (4) filling the flask to 1 liter with glacial acetic acid and (5) allowing the mixture to age for 8 hours to complete reaction between acetic anhydride and water. The perchloric acid solution is standardized using potassium acid phthalate (0.4 g of potassium acid phthalate in 50 ml of glacial acetic acid) or with the crystalline diglycidyl ether of bisphenol-A;
(b) a tetraethyl ammonium bromide (TEAB) solution by dissolving, at room temperature, with agitation, 100 g of TEAB in 400 ml of glacial acetic acid;
(c) a 0.1 percent solution of crystal violet indicator in glacial acetic acid.

A solution of the CCR resin was prepared using an amount of the CCR resin which contains 0.001 to 0.002 equivalent of epoxy groups by initially weighing the amount of the sample (nearest milligram) into a 2-ounce disposable glass bottle. Thereafter, 10 ml of methylchloride was added to the bottle. A clean magnetic stirrer was used to dissolve the sample of CCR resin and throughout titration. Subsequently, 10 ml of the TEAB solution was added to the CCR resin solution and then 6-8 drops of crystal violet indicator

were added. It was then titrated with 0.1 N-perchloric acid to endpoint which is a sharp color change from blue to green and which is stable for 30 seconds.

The percent epoxide groups was then calculated using the formula:

$$\%E = \frac{F \times B \times 4.3}{W}$$

wherein %E = percent, by weight, of epoxy groups in the CCR resin.

F = normality of pechloric acid solution

B = the volume (in milliliters) of the perchloric acid solution used in the titration to the endpoint

W = weight (in grams) of epoxy resin sample

(2) The residual phenolic hydroxyl is the weight percent phenolic hydroxyl groups in the CCR resin. This percentage was determined by dissolving the CCR resin in a basic medium such as pyridine and titrating to endpoint with a strong base such as tetrabutyl ammonium hydroxide or sodium methylate. In this example, the percent hydroxyl was determined by initially placing 75 ml of pyridine in a 250 ml beaker fitted with a rubber stopper having two holes - one hole for a nitrogen inlet and the other hole for the titration buret - and containing a magnetic stirrer. While agitating, the inside of the beaker was purged with nitrogen for 2 to 3 minutes. An Azoviolet indicator, as a saturated solution in benzene, was then added to the pyridine until the solution became a good straw yellow color. This mixture was titrated with 0.1 N-tetrabutyl ammonium hydroxide to a blue endpoint which normally requires only a few drops. The nitrogen purge was continued for an additional 2 to 3 minutes after this time.

A sample of the CCR resin containing one milliequivalent or less of phenolic hydroxyl groups was dissolved into the pre-titrated pyridine. The nitrogen blanket was maintained and the CCR resin allowed to dissolve. The solution was subsequently titrated using a 0.1 N-tetrabutylammonium hydroxide to a blue endpoint. For accurate determination, the tetrabutylammonium hydroxide (TBAH) solution should contain no water.

The weight percent hydroxide groups in the CCR resin were determined

$$D = \frac{1.7 \times N \times (E-F)}{U}$$

using the following formula:

wherein

D = weight percent phenolic -OH groups in the CCR resin.

N = the normality of TBAH solution

E = the total volume of the TBAH titrant used in ml

F = the volume of the TBAH titrant in ml used in the pre-titration

U = weight of the sample of the CCR resin in grams

(3) The percent of hydroxyl groups remaining is the percentage of hydroxyl groups of the polyol component employed in preparing the CCR resin which remain unreacted, i.e., exist as terminal hydroxyl groups in the CCR resin. The percentage is calculated by the formula:

$$\frac{n}{m} \times 100$$

wherein n is the number of equivalents of terminal hydroxyl groups in the CCR resin and m is the number of equivalents of hydroxyl groups reactive with an epoxy resin contained by the polyol employed in the preparation of the CCR resin.

(4) Melt viscosity is defined as the viscosity of the molten resin at the specified temperature as measured using an ICI cone and plate viscometer.

(5) Softening point is defined as the temperature at which the epoxy resin suspended in a cup with a 6.35 mm hole in the bottom flows downward a distance of 19 mm as the sample is heated at a linear rate in air. It was measured using ASTM test method designated D-3104-77 using a Mettler softening point

apparatus Model FP5/53.

Example 1

A CCR resin was prepared in a reaction vessel equipped with heating mantle and a nitrogen sparger by reacting 2097.1 g (11.65 equivalents) of Polyepoxide A, 902.9 g (7.92 equivalents) of Polyol D and 1.05 g of Catalyst G. The Catalyst was added after mixing polyol and polyepoxide and heating to 90° C. The reaction mixture containing the catalyst was stirred and maintained at 130° C for 2.2 hours. At the end of this time, 0.69 g of Reaction Inhibitor L was added to the reaction mixture. The reaction mixture containing the reaction inhibitor was subsequently stirred and maintained at 130° C for 1.3 hours. At this time, the reaction product was poured from the reactor and allowed to cool and solidify.

Example 2

A CCR resin was prepared in the same manner as Example 5 except that 719.1 g (4.00 equivalents) of Polyepoxide A, 280.9 g (2.46 equivalents) of Polyol D and 0.35 g of Catalyst G were employed and the reaction mixture was maintained, with constant agitation, at 135° C for 2 hours. In addition, following the addition of Reaction Inhibitor L to the reaction mixture, the reaction mixture containing the reaction inhibitor was stirred and maintained at 135° C for 50 minutes. At this time, the reaction product was poured from the reactor and allowed to cool and solidify.

Comparative Example A

An epoxy resin was prepared using the techniques of Example 5 except that 745.6 g (4.1 equivalents) of Polyepoxide A, 254.4 g (2.23 equivalents) of Polyol D and 0.35 g of Catalyst G were employed. The reaction mixture was stirred and maintained at 135° C for 2½ hours. At this time, 0.23 g of Reaction Inhibitor L was added to the reaction mixture. The reaction mixture containing the reaction inhibitor was stirred and maintained at 135° C for ½ hour at which time the reaction product was poured from the reactor and allowed to cool and solidify.

The chemical and physical properties of the CCR resins prepared in Examples 5 and 6 and the epoxy resin prepared in Comparative Example B were measured and the results of these measurements are set forth in Table II.

TABLE I

| | Example 1 | Example 2 | Comparative Example A |
|---|---|---|---|
| **Reaction Mixture** | | | |
| Epoxy: Hydroxyl Equivalents | 1.47:1 | 1.62:1 | 1.86:1 |
| Theoretical EEW | 824 | 663 | 535 |
| **Reaction Product** | | | |
| Epoxide, Wt. % (1) | 7.72 | 8.61 | 8.14 |
| EEW | 557 | 499 | 528 |
| Residual Hydroxyl, Wt. % (2) | 0.942 | 0.808 | 0.103 |
| HEW | 1810 | 2104 | 16552 |
| Melt viscosity at 150°C, cps (3) (Pa·s) | 300 (0.300) | 240 (0.240) | 590 (0.590) |
| Softening Point, °C (4) | 77.6 | 73.8 | 82.1 |

As evidenced by the results in the foregoing Table II, the CCR resins are again shown to exhibit lower melt viscosities than a conventional epoxy resin at similar EEW.

Example 3

A CCR resin was prepared using the techniques of Example 5 except that 2054.1 g (11.41 equivalents) of Polyepoxide A and 945.9 g (8.30 equivalents) of Polyol D and 1.05 g of Catalyst G were employed. The reaction mixture containing a catalyst was maintained at 135°C for 2 hours. At this time, Reaction Inhibitor L (0.69 g) was added. Ten minutes after the addition of Inhibitor L, the mixture was found to have an EEW of 661 and a melt viscosity at 150°C of 610 cps (0.610 Pa•s). The reaction mixture containing the reaction inhibitor was stirred and maintained at 135°C for 1 2/3 hours. At this time, the reaction product was poured from the reactor and allowed to cool and solidify. The resulting product was found to have an EEW of 676, an HEW of 1918, and contained 6.36 percent epoxy groups and 0.89 percent terminal hydroxyl groups. This latter figure corresponded to 18.9 percent of the hydroxyl groups of the polyol component employed in preparing the resulting CCR resin. The melt viscosity of the CCR resin at 150°C was 670 cps (0.670 Pa•s) and the softening point was 87.5°C. As evidenced by these results, the addition of the reaction inhibitor effectively limits further reaction of the epoxide and hydroxyl groups.

It should be noted from this example that the melt viscosity of the thus prepared CCR resin is not significantly higher than the epoxy resin of Comparative Example A, although the EEW is increased significantly.

In a similar manner, a CCR resin was prepared except that the reaction mixture was maintained at 135°C for 3.25 hours. At this time, Reaction Inhibitor N (0.50 g) was added. Fifteen minutes after the addition of the reaction inhibitor, the mixture was found to have an EEW of 758 and a melt viscosity at 150°C of 1680 cps (1.680 Pa•s). The reaction mixture containing the reaction inhibitor was maintained, with agitation, at 135°C for an additional hour. The resulting product was found to have an EEW of 761 and a melt viscosity at 150°C of 1680 cps (1.680 Pa•s), thereby showing the effectiveness of this reaction inhibitor in terminating the reaction.

Similar results were obtained using Catalyst H to prepare the CCR resin.

Examples 4-11

A series of CCR resins are prepared from Polyepoxide A, Polyol D and Catalyst G. The polyepoxide and polyol components were used in amounts to give the epoxy:hydroxyl equivalents specified in Table III. The reaction temperature and the reaction inhibitor employed, if any, are set forth in Table III. When no reaction inhibitor was employed, upon obtaining the desired conversion, the reaction was stopped by the techniques of Example I.

Comparative Example C

An epoxy resin was prepared using identical techniques to those of Example 3 except that the polyol component was fully converted.

The chemical and physical properties of the CCR resins of Examples 4-11 and the epoxy resin of Comparative Example B are set forth in Table II.

TABLE II

| | Example 4 | Example 5 | Example 6 | Example 7 | Example 8 | Example 9 | Example 10 | Example 11 | Comparative Example B |
|---|---|---|---|---|---|---|---|---|---|
| Reaction Mixture | | | | | | | | | |
| Epoxy: Hydroxyl Equivalents | 1.44:1 | 1.37:1 | 1.35:1 | 1.24:1 | 1.11:1 | 1.37:1 | 1.24:1 | 1.24:1 | 1.50:1 |
| Theoretical EEW | 848 | 975 | 1018 | 1406 | 2852 | 975 | 1406 | 1406 | 768 |
| Reaction Temperature, °C | 130 | 120 | 130 | 135 | 135 | 135 | 135 | 135 | 120 |
| Reaction Inhibitor | none | -- | -- | -- | -- | M | L | L | -- |
| Reaction Product | 0.8 kg | 0.8 kg | 0.8 kg | 1 kg | 1 kg | 1 kg | 3 kg | 3 kg | 0.8 kg |
| Wt. % (1) | 5.47 | 5.39 | 5.39 | 4.98 | 5.41 | 5.77 | 5.61 | 5.88 | 5.53 |

TABLE II continued.....

| | Example 4 | Example 5 | Example 6 | Example 7 | Example 8 | Example 9 | Example 10 | Example 11 | Comparative Example B |
|---|---|---|---|---|---|---|---|---|---|
| EEW | 786 | 798 | 798 | 864 | 796 | 745 | 766 | 731 | 778 |
| Residual Hydroxyl, Wt. % (2) | 0.258 | 0.449 | 0.564 | 0.758 | 1.54 | 0.538 | 1.03 | 1.37 | 0.06 |
| HEW | 6574 | 3791 | 3015 | 2244 | 1104 | 3161 | 1642 | 1238 | 28333 |
| % of Hydroxyl Equivalents Remaining (3) | 5.66 | 9.5 | 11.8 | 15.0 | 28.4 | 11.4 | 20.5 | 27.2 | 1.36 |
| Melt Viscosity at 150°C, cps (4) (Pa·s) | 2740 (2.740) | 2220 (2.220) | 1900 (1.900) | 1640 (1.640) | 680 (0.680) | 1400 (1.400) | 870 (0.870) | 630 (0.630) | 3600 (3.600) |
| Softening Point °C (5) | 100.4 | 100.5 | 100.2 | 98.3 | 93.8 | 93.5 | 90.6 | 88.9 | 102.3 |

Example 12

A CCR resin was prepared by adding to a suitably sized vessel 611.5 g (3.4 equivalents) of Polyepoxide A, 388.5 g (3.41 equivalents) of Polyol D and 0.3 g of a 50 weight percent solution of Catalyst J in water. This reaction mixture was stirred and maintained at 135° C for 2½ hours. At this time, prior to complete conversion of either the polyglycidyl ether or polyol component, 0.75 g of Reaction Inhibitor L was added to the reaction mixture. The reaction mixture containing the inhibitor was stirred for an additional 2 hours and maintained at 135° C for this period. At this time, the reaction mixture was poured from the reactor and allowed to cool and solidify.

The resulting product contained 4.61 percent of epoxy groups and 1.91 percent of terminal hydroxyl groups. The HEW of the CCR resin product was 892 and the EEW was 932. The melt viscosity at 150 °C was 700 cps (0.700 Pa•s) and the softening point was 90.3 °C. As evidenced by this example, a CCR resin was effectively prepared using equivalent amounts of the polyol and polyepoxide components.

Example 13

In an identical manner to that employed in Example 12, a CCR resin was prepared from equivalent amounts of Polyepoxide A (765.4 g) and Polyol E (234.6 g). The reaction mixture containing 0.35 g of the Catalyst G was stirred and maintained at 135 °C for 2.6 hours at which time 0.23 g of Reaction Inhibitor L was added. The reaction mixture containing the inhibitor was stirred and maintained at 135 °C for an additional 3 1/2 hours. The resulting product possessed an EEW of 986 and an HEW of 1087. It contained 4.36 percent of epoxy groups and 1.56 percent of terminal hydroxyl groups based on the total weight of the CCR resin. The melt viscosity at 150 °C was 1040 cps (1.040 Pa•s) and the epoxy resin possessed a softening point of 88.5 °C.

Comparative Example C

For purposes of comparison, an epoxy resin having a high EEW was prepared except that 522.6 g (2.90 equivalents) of Polyepoxide A, 277.4 g (2.43 equivalents) of Polyol D and 0.16 g of Catalyst G were reacted at 150 °C for 3 1/3 hours. The polyol component at these conditions was essentially completely converted.

The resulting resin possessed an EEW of 1744 and an HEW of 12947. Although the resin contained 2.47 percent epoxy groups, it contained less than 0.13 weight percent terminal hydroxyl groups. Although this is lower than the CCR resin prepared in Example 19, the melt viscosity at 200 °C was 6400 cps (6.400 Pa•s).

Comparative Example D

The conventional epoxy resin of Comparative Example D was also formulated into a can coating composition using the components of Example 20. However, to prepare a coating composition having a viscosity which is suitably employed in commercial operation, the organic liqud solution could contain only 40 percent solids (i.e., hardener plus the epoxy resin) and had a viscosity of 230 cps (0.230 Pa•s) at 25 °C.

The CCR resins may be converted to powder form for the preparation therefrom of powder coating formulations.

## Claims

1. A process for preparing an epoxy resin by reacting a polyepoxide with a polyhydric phenol or a saturated aliphatic polyol having primary OH-groups, in the presence of a catalyst for the reaction of an epoxy group with a hydroxyl group characterised by terminating the reaction by the addition of a material which effectively inhibits further reaction of the epoxy and hydroxy groups at a point when the reaction product contains at least 0.25 weight percent of each of the epoxy groups and the terminal hydroxyl groups, said weight percent being based on the total weight of the epoxy resin reaction product, provided that the ratio of epoxy groups to hydroxyl groups in the starting materials is less than 2:1.

2. The method as claimed in Claim 1, characterised in that the reaction is terminated by the addition of a solvent to the reaction mixture at desired conversion, or by the addition of a strong acid or an anhydride or ester of a strong acid.

3. The method as claimed in Claim 1 or Claim 2, characterised in that the reaction is terminated when from 10 to 95 percent of the deficient components, or if the polyepoxide and polyol components are employed in equivalent amounts, from 10 to 95 percent of both components, have reacted.

4. The process as claimed in any one of Claims 1 to 3, characterised in that the inhibitor is added in an amount of at least 1 equivalent per equivalent of catalyst employed.

5. The process as claimed in any one of Claims 1 to 4, characterised in that the reaction is terminated at a point when the reaction product contains 0.5 to less than 20 weight percent epoxy groups and from 0.25 to less than 10 weight percent terminal hydroxyl groups.

6. The process as claimed in any one of Claims wherein the terminal hydroxyl groups are phenolic hydroxyl groups.

7. A process as claimed in any one of the preceding claims characterised in that the reaction product has a number average molecular weight of less than 10,000.

## Revendications

1. Procédé de préparation d'une résine époxy par réaction d'un polyépoxyde avec un phénol polyhydroxylé ou un polyol aliphatique saturé comportant des groupes OH primaires, en présence d'un catalyseur pour la réaction d'un groupe époxy avec un groupe hydroxyle, caractérisé en ce qu'on arrête la réaction par l'addition d'une matière qui inhibe efficacement toute réaction ultérieure des groupes époxy et hydroxy, à un stade ou le produit de réaction contient au moins 0,25 % en poids de chacun des groupes époxy et des groupes hydroxyle terminaux, ledit pourcentage en poids étant rapporté au poids total du produit de réaction résine époxy, étant entendu que le rapport des groupes époxy aux groupes hydroxyle dans les matières de départ est inférieur à 2 : 1.

2. Procédé selon la revendication 1, caractérisé en ce qu'on arrête la réaction par l'addition d'un solvant au mélange de réaction à la conversion désirée, ou par l'addition d'un acide fort ou d'un anhydride ou ester d'un acide fort.

3. Procédé selon la revendication 1 ou 2, caractérisé en ce qu'on arrête la réaction quand de 10 à 95 % du composant présent en quantité déficitaire ou, si l'on utilise les composants polyépoxyde et polyol en des quantités équivalentes, de 10 à 95 % des deux composants, ont réagi.

4. Procédé selon l'une quelconque des revendications 1 à 3, caractérisé en ce qu'on ajoute l'inhibiteur en une quantité d'au moins 1 équivalent par équivalent de catalyseur utilisé.

5. Procédé selon l'une quelconque des revendications 1 à 4, caractérisé en ce que la réaction est arrêtée à un stade où le produit de réaction contient de 0,5 à moins de 20 % en poids de groupes époxy et de 0,25 à moins de 10 % en poids de groupes hydroxyle terminaux.

6. Procédé selon l'une quelconque des revendications 1 à 5, dans lequel les groupes hydroxyle terminaux sont des groupes hydroxyle phénoliques.

7. Procédé selon l'une quelconque des revendications précédentes, caractérisé en ce que le produit de réaction possède une masse moléculaire moyenne en nombre inférieure à 10.000.

## Ansprüche

1. Verfahren zum Herstellen eines Epoxyharzes durch Umsetzen eines Polyepoxids mit einem mehrwertigen Phenol oder einem gesättigten aliphatischen Polyol mit primären OH-Gruppen in Gegenwart eines Katalysators für die Umsetzung einer Epoxygruppe mit einer Hydroxylgruppe,
**gekennzeichnet durch**
Beenden der Reaktion durch Zusetzen eines Stoffes, der die weitere Reaktion der Epoxygruppen und Hydroxygruppen wirksam an einem Punkt verhindert, an dem das Reaktionsprodukt mindestens 0,25 Gew.-%, bezogen auf Gesamtgewicht des Epoxyharzreaktionsproduktes, von jeweils Epoxygruppen und endständigen Hydroxylgruppen aufweist, unter der Voraussetzung, daß das Verhältnis von Epoxygruppen zu Hydroxylgruppen in den Ausgangsstoffen kleiner als 2:1 ist.

2. Verfahren nach Anspruch 1,
**dadurch gekennzeichnet,**
daß die Umsetzung durch Zugabe eines Lösemittels zur Reaktionsmischung bei der gewünschten Umsetzung oder durch Zugabe einer starken Säure oder eines Anhydrids oder Esters einer starken Säure beendet wird.

3. Verfahren nach Anspruch 1 oder 2,
**dadurch gekennzeichnet,**
daß die Reaktion beendet wird, wenn von 10 bis 95 % der in nicht ausreichender Menge vorhandenen Bestandteile oder, wenn Polyepoxid- und Polyolbestandteile in äquivalenten Mengen eingesetzt werden, von 10 bis 95 % beider Bestandteile reagiert haben.

4. Verfahren nach jedem der Ansprüche 1 bis 3,
**dadurch gekennzeichnet,**
daß der Hemmer in einer Menge von mindestens einem Äquivalent pro verwendetem Äquivalent Katalysator zugesetzt wird.

5. Verfahren nach jedem der Ansprüche 1 bis 4,
**dadurch gekennzeichnet,**
daß die Reaktion an einem Punkt beendet wird, an dem das Reaktionsprodukt 0,5 bis weniger als 20 Gew.-% Epoxygruppen und von 0,25 bis weniger als 10 Gew.-% endständige Hydroxylgruppen aufweist.

6. Verfahren nach jedem der Ansprüche 1 bis 5,
**dadurch gekennzeichnet,**
daß die endständigen Hydroxylgruppen phenolische Hydroxylgruppen sind.

7. Verfahren nach jedem der vorstehenden Ansprüche,
**dadurch gekennzeichnet,**
daß das Reaktionsprodukt ein zahlenmittleres Molekulargewicht von kleiner als 10.000 aufweist.